# EUROPEAN PATENT SPECIFICATION

(11) **EP 4 425 673 B1**
(45) Date of publication and mention of the grant of the patent: **20.05.2026**
(21) Application number: 23892762.8
(22) Date of filing: 25.12.2023
(51) Int. Cl.: H01M 50/30, H01M 50/244

(54) **POWER BATTERY PACK AND ELECTRIC DEVICE**
BATTERIEPACK UND ELEKTRISCHE VORRICHTUNG
BLOC-BATTERIE D'ALIMENTATION ET DISPOSITIF ÉLECTRIQUE

(30) Priority: 23.12.2022 CN 202223470196 U
(43) Date of publication of application: 04.09.2024
(73) Proprietor: SVOLT Energy Technology Co., Ltd., Changzhou, Jiangsu 213200 (CN)
(72) Inventor: ZHAO, Xiangyang, Changzhou, Jiangsu 213200 (CN); MENG, Zhiqiang, Changzhou, Jiangsu 213200 (CN); ZHAO, Liang, Changzhou, Jiangsu 213200 (CN); CHENG, Chuansheng, Changzhou, Jiangsu 213200 (CN)
(74) Representative: Michalski Hüttermann & Partner Patentanwälte mbB
(86) International application number: PCT/CN2023/141654
(87) International publication number: WO 2024/131988

(56) References cited:
- EP-A1- 4 456 300
- EP-A2- 4 439 795
- WO-A1-2022/198457
- CN-A- 107 134 557
- CN-U- 207 677 016
- CN-U- 217 334 327
- CN-U- 219 067 128
- CN-U- 219 163 626
- DE-A1- 102017 212 223
- DE-A1- 102019 207 084

## Description

### CROSS-REFERENCE TO RELATED APPLICATION

The present application claims priority to Chinese Patent Application No. 202223470196.X, filed with the Chinese Patent Office on Dec. 23, 2022, entitled "Power Battery Pack and Electrical Apparatus".

### TECHNICAL FIELD

The present application relates to the technical field of power batteries, in particular to a power battery pack and an electrical apparatus.

### BACKGROUND

A battery is an apparatus which can convert chemical energy into electrical energy, and a battery pack is a component unit of the battery, and a plurality of battery cells are arranged in the battery pack.

At present, for a battery pack with a battery cell with a bottom discharge pressure relief valve, pressure of the battery pack can only be relieved by means of the pressure relief valve of the whole pack, or the battery pack is isolated into one pressure relief cavity for pressure relief, overall pressure relief of the battery pack may increase probability of heat spread to battery cells in neighboring modules, and overall thermal runaway is easily caused.

DE102019207084A1 relates to a battery module with at least one battery cell having a cell housing which has a bottom side and an upper side opposite the bottom side in a first direction, wherein an opening which can be opened in the event of an overpressure in the battery cell is arranged in the upper side. The battery module has an atomizing device which is arranged in the first direction above the releasable opening of the at least one battery cell, and which has at least one flame passage opening through which flames emerging from the releasable opening of the battery cell can pass, and which has a passage area which is smaller than an area of the releasable opening.

EP4456300A1 relates to a battery, an electric device, and a battery manufacturing method and device which can improve battery safety. The battery comprises a plurality of battery cells arranged in a first direction. The first wall of each battery cell is provided with a pressure relief mechanism used for actuating when the pressure or temperature in the battery cell reaches a threshold to discharge the internal pressure of the battery cell; and a protection member that covers the pressure relief mechanism of the plurality of battery cells outside the plurality of battery cells and forms an exhaust passage with the first walls of the plurality of battery cells, the exhaust passage being used for discharging emissions discharged from the pressure relief mechanism from two ends of the exhaust passage in the first direction when the pressure relief mechanism is actuated.

### SUMMARY OF THE INVENTION

Therefore, the technical problem to be solved by the present application is to overcome the defect in the prior art that overall pressure relief of a battery pack increases probability of heat spread of battery cells in neighboring modules, and therefore, the present application provides a power battery pack which reduces heat spread of battery cells in neighboring modules.

In order to solve the above problem, the present application provides a power battery pack, comprising a supporting plate and a module. The supporting plate is provided with a pressure relief groove, the pressure relief groove has a plurality of pressure relief cavities arranged in sequence along a length direction thereof, and each pressure relief cavity is provided with at least one pressure relief hole in each side wall on each of two opposite sides of the pressure relief groove. The module comprises a plurality of battery cells arranged in sequence, each cell corresponds to a pressure relief cavity, and each cell is provided with an explosion-proof valve which is partially positioned in the pressure relief cavity.

Further, a thermal insulation pad is arranged between every two neighboring battery cells, the thermal insulation pad extends into the pressure relief groove and abuts against an inner wall of the pressure relief groove, so that every two neighboring thermal insulation pads partition one pressure relief cavity in the pressure relief groove.

Optionally, the supporting plate has a structure of a plate body, a part of the plate body of the supporting plate is inwardly recessed to form the pressure relief groove, and the module is attached to another part, which protrudes relative to the pressure relief groove, of the plate body of the supporting plate.

Optionally, an area of a cross section of the pressure relief hole gradually decreases in a direction from the inner wall to the outer wall of the pressure relief groove, and the cross section of the pressure relief hole is a section perpendicular to a central axis of the pressure relief hole.

Optionally, a one-way membrane structure or a one-way valve is arranged at the pressure relief hole.

Optionally, the power battery pack further comprises a first cooling plate, wherein the first cooling plate is provided with an avoidance groove, a baffle is provided at one end of the avoidance groove, the pressure relief groove penetrates through the avoidance groove, the baffle shields one end of the pressure relief groove, the pressure relief hole is arranged to avoid the avoidance groove, and the first cooling plate is connected to the supporting plate.

Optionally, the first cooling plate comprises: a runner plate, provided with a first groove; and a cooling flat plate, provided with a second groove, wherein the cooling flat plate is buckled on the runner plate, so that the second groove is positioned opposite to the first groove to form the avoidance groove.

Optionally, the power battery pack further comprises a second cooling plate, wherein the second cooling plate and the first cooling plate are oppositely arranged on two opposite sides of the module.

Optionally, the power battery pack further comprises a bottom protective plate, wherein the bottom protective plate abuts against an outer wall of a groove bottom of the pressure relief groove, so that a pressure relief channel is formed along each of two opposite sides, in a width direction, of the pressure relief groove.

The present application further provides an electrical apparatus, comprising a power battery pack, wherein the power battery pack is configured as the power battery pack according to any one of the above.

The present application has the following advantages:
1. The battery cell and the pressure relief cavity formed by the pressure relief groove can accommodate part of the explosion-proof valve, and an opening position of the pressure relief hole is far away from the explosion-proof valve, so that, when thermal runaway occurs to a single cell, a high temperature gas can only be discharged through pressure relief holes in the side wall, which can effectively protect an electrical assembly, a water cooling pipeline and other parts in the box.
2. The thermal insulation pad is attached to the inner wall of the pressure relief groove to form an independent pressure relief cavity, which can achieve a good protection effect.
3. The pressure relief hole has a shape of a bell mouth or a one-way valve or a one-way membrane structure is arranged at the pressure relief hole, which can reduce the influence of thermal runaway on neighboring battery cells.
4. The first cooling plate is arranged at the bottom, which can achieve a cooling effect on the battery cell and improve cooling efficiency.
5. The second cooling plate is arranged at the top, and the second cooling plate is cooperated with the first cooling plate, which can achieve a dual cooling effect on the module, and further improve the cooling efficiency.
6. By adding the bottom protective plate, the supporting plate is not only further supported, the pressure relief channel can also be formed, so that the hot gas can be discharged from the pressure relief channel, which is conducive to treatment of the discharged gas, thus optimizing the ambient air.

### BRIEF DESCRIPTION OF THE DRAWINGS

In order to more clearly illustrate technical solutions in specific embodiments of the present application or in the prior art, the accompanying drawings to be used in the description of the specific embodiments or the prior art will be briefly introduced below, and it will be apparent that the accompanying drawings in the following description are some of the embodiments of the present application, and those of ordinary skill in the art can also obtain other drawings from these drawings without creative work.
FIG. 1 is a schematic diagram of an explosion structure of a power battery pack in an embodiment of the present application;
FIG. 2 is a schematic diagram of a three-dimensional structure of a supporting plate of a power battery pack in an embodiment of the present application;
FIG. 3 is a schematic diagram of a three-dimensional structure of a power battery pack in an embodiment of the present application;
FIG. 4 is a schematic diagram of a three-dimensional structure of a pressure relief groove of a power battery pack in an embodiment of the present application;
FIG. 5 is a schematic diagram of an explosion structure of a power battery pack in another embodiment of the present application;
FIG. 6 is a schematic diagram of a three-dimensional structure of a first cooling plate of a power battery pack in an embodiment of the present application;
FIG. 7 is a schematic diagram of a top view structure of a runner plate of a power battery pack in another embodiment of the present application;
FIG. 8 is a schematic diagram of a top view structure of a cooling flat plate of a power battery pack in another embodiment of the present application;
FIG. 9 is a schematic diagram of a three-dimensional structure of a power battery pack without a second cooling plate in another embodiment of the present application.

Reference numerals:
100. Power battery pack; 110. Supporting plate; 111. Pressure relief groove; 113. Pressure relief hole; 115. Pressure relief channel; 117. Pressure relief cavity; 120. Module; 121. Battery cell; 123. Thermal insulation pad; 125. Explosion-proof valve; 127. Module end plate; 130. Bottom protective plate; 140. Box body; 141. Transverse partition plate; 143. Longitudinal partition plate; 1401. Side clearance; 150. Spacer; 160. Module pressure relief valve; 170. Electrical assembly; 180. Box pressure relief valve; 191. First cooling plate; 1911. Runner plate; 1913. Cooling flat plate; 193. Second cooling plate; Avoidance groove, 1901; Baffle, 1903.

### DETAILED DESCRIPTION

The technical solutions in the present application will be clearly and completely described below in conjunction with the drawings. Apparently, the described embodiments are part of, but not all of, the embodiments of the present application. Based on the embodiments of the present application, all other embodiments obtained by those of ordinary skill in the art without creative work are included in the protection scope of the present application.

### Exemplary power battery pack

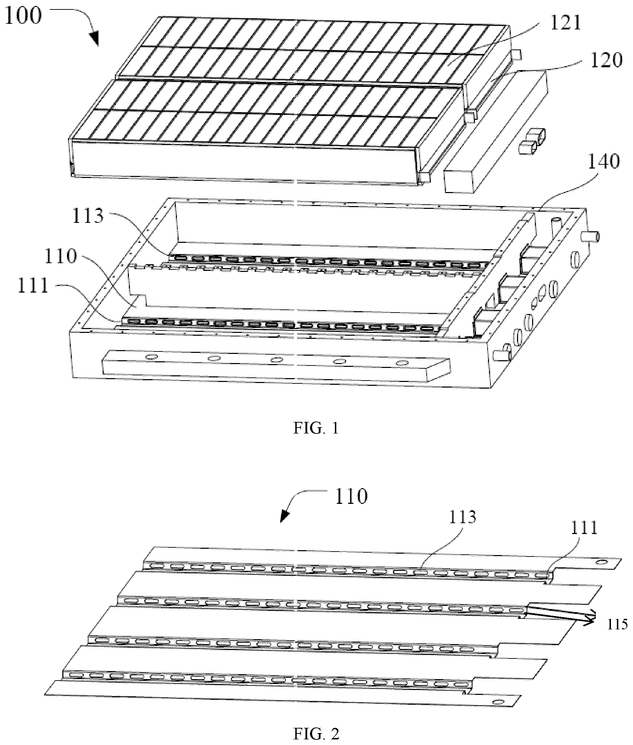

As shown in FIGs. 1 to 3, a power battery pack 100 includes a supporting plate 110 and a module 120. The supporting plate 110 is provided with a pressure relief groove 111, the pressure relief groove 111 has a plurality of pressure relief cavities 117 arranged in sequence along a length direction thereof, and each pressure relief cavity 117 is provided with at least one pressure relief hole 113 in each side wall on each of two opposite sides of the pressure relief groove 111. The module 120 includes a plurality of battery cells 121 arranged in sequence, each battery cell 121 corresponds to a pressure relief cavity 117, and each battery cell 121 is provided with an explosion-proof valve 125 which is partially positioned in the pressure relief cavity 117.

The supporting plate 110 has a uniform thickness. The pressure relief groove 111 extends from a first side of the supporting plate 110 to an opposite second side, wherein the first side is opposite to the second side. The pressure relief groove 111 has a groove bottom and two opposite side walls, and the pressure relief hole 113 is formed in the side wall and close to the groove bottom. The plurality of pressure relief holes 113 are formed in sequence along a length direction of the pressure relief groove 111. The module 120 includes the plurality of battery cells 121, and the explosion-proof valve 125 is arranged at a bottom of each battery cell 121. When the module 120 is placed on the supporting plate 110, the plurality of battery cells 121 are arranged along the length direction of the pressure relief groove 111, and the explosion-proof valve 125 of each battery cell 121 is opposite to the pressure relief groove 111. When the battery cell 121 abuts against the supporting plate 110, the module 120 and the pressure relief cavity 117 formed by the pressure relief groove 111 can accommodate part of the explosion-proof valve 125, and an opening position of the pressure relief hole 113 is away from the explosion-proof valve 125. When thermal runaway occurs to a single battery cell 121, as a sealed and independent pressure relief cavity 117 is already formed at the position of the explosion-proof valve 125 of the runaway battery cell, a high-temperature gas can only be discharged to both sides through the pressure relief holes 113 in the side wall of the pressure relief groove 111. Therefore, an electrical assembly, a water cooling pipeline and other parts in the box can be effectively protected.

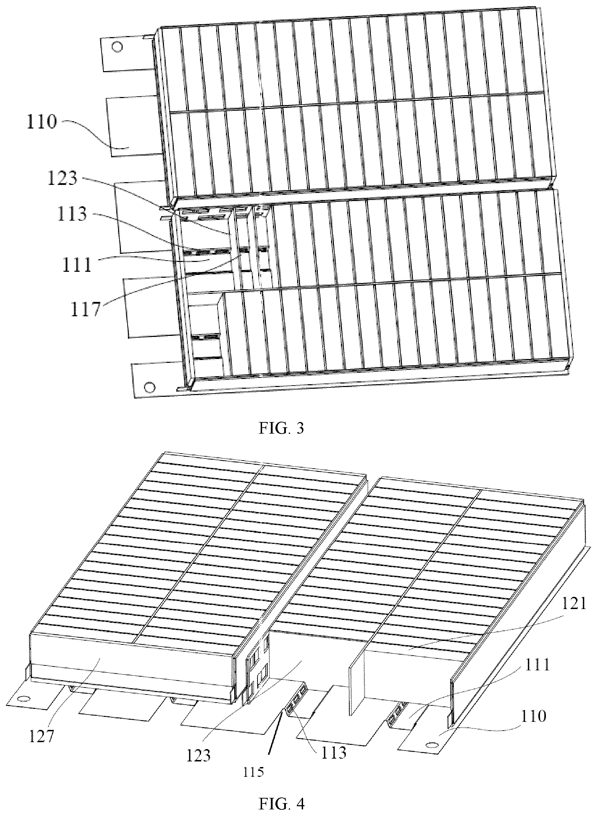

As shown in FIGs.3 and 4, a thermal insulation pad 123 is arranged between every two neighboring battery cells 121, the thermal insulation pad 123 extends into the pressure relief groove 111 and abuts against an inner wall of the pressure relief groove 111, so that every two neighboring thermal insulation pads 123 partition one sealed pressure relief cavity 117 in the pressure relief groove 111.

As shown in FIG.4, the bottom of the thermal insulation pad 123 protrudes to form a protruding structure, and the protruding structure of the thermal insulation pad 123 is attached to the side walls and the bottom wall on two sides of the pressure relief groove 111, so as to form an independent pressure relief cavity 117 for a single battery cell. Although pressure relief holes 113 are also present in the pressure relief cavities 117 corresponding to the neighboring battery cells 121, as the pressure relief cavities 117 corresponding to the neighboring battery cells 121 are sealed, it is difficult for the high-temperature gas to enter, and the high-temperature gas is discharged along the pressure relief channels 115 on both sides.

Optionally, the supporting plate 110 has a structure of a plate body, a part of the plate body of the supporting plate 110 is inwardly recessed to form the pressure relief groove 111, and the module 120 is attached to another part, which protrudes relative to the pressure relief groove 111, of the plate body of the supporting plate 110.

Optionally, the pressure relief groove 111 may be formed by the supporting plate 110 being recessed toward one side of the plate surface, and two opposite sides of the pressure relief groove 111 are protruded relative to the pressure relief groove 111. The protruded parts have flat surfaces and may be used for bonding with the battery cells 121 of the module 120.

Optionally, an area of a cross section of the pressure relief hole 113 gradually decreases in a direction from the inner wall to an outer wall of the pressure relief groove 111, and the cross section of the pressure relief hole 113 is a section perpendicular to a central axis of the pressure relief hole 113.

The area of the cross section of the pressure relief hole 113 gradually decreases from the inner side wall to the outer part of the pressure relief groove 111, so that the pressure relief hole 113 has a structure of a bell. Specifically, the area of the cross section of the pressure relief hole 113 close to the inner side wall of the pressure relief groove 111 is greater than that far from the inner side wall of the pressure relief groove 111. The cross section of the pressure relief hole 113 is a plane perpendicular to the central axis of the pressure relief hole 113. The pressure relief hole 113 may be a strip-shaped hole, and the bell-mouth shape of the pressure relief hole 113 will increase difficulty for the hot gas to enter the pressure relief cavity 117 corresponding to the pressure relief hole 113 from the outside, so that, when thermal runaway occurs to a single battery cell 121, the hot gas is not discharged to the neighboring battery cell 121.

Optionally, a one-way membrane structure or a one-way valve is arranged at the pressure relief hole 113. The one-way membrane structure is made of mica, and the gas in the pressure relief cavity 117 can break through the one-way membrane structure and be discharged to the outside, but cannot return to the pressure relief cavity. In addition, the one-way membrane structure can also be replaced by the one-way valve, so that the gas can only be discharged to the outside from the pressure relief cavity 117 through the one-way membrane structure, and not discharged to the pressure relief cavity 117 through the one-way membrane structure. Therefore, the difficulty for the hot gas to enter the pressure relief cavity 117 corresponding to the pressure relief hole 113 from the outside can also be increased.

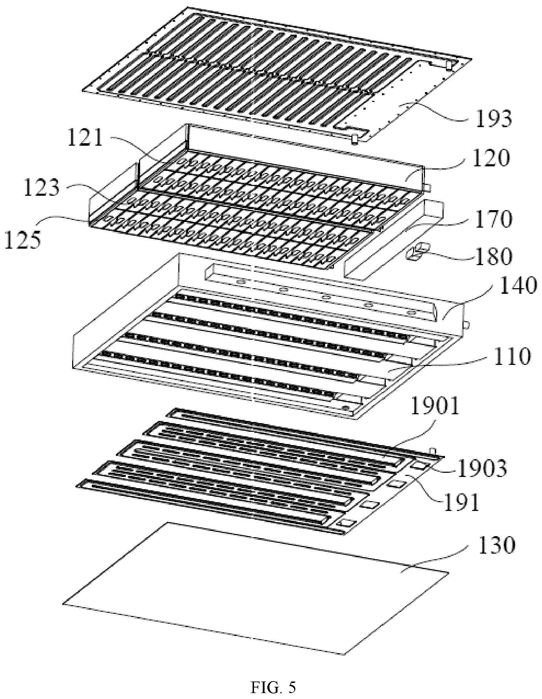

Optionally, as shown in FIG.5, the power battery pack further includes a first cooling plate 191, the first cooling plate 191 is provided with an avoidance groove 1901, a baffle 1903 is arranged at one end of the avoidance groove 1901, the pressure relief groove 111 penetrates through the avoidance groove 1901, the baffle 1903 shields one end of the pressure relief groove 111, the pressure relief hole 113 is arranged to avoid the avoidance groove 1901, and the first cooling plate 191 is connected to the supporting plate 110.

The first cooling plate 191 may be a water cooling plate, and the first cooling plate 191 may be adhered to the supporting plate 110 by means of a heat-conducting structure to cool the battery cell 121. The avoidance grooves 1901 in the first cooling plate 191 correspond to the pressure relief grooves 111 one by one, and the first cooling plate 191 can be connected to the supporting plate 110 in an adhesive manner. The avoidance groove 1901 is sleeved outside the pressure relief groove 111, and the pressure relief hole 113 is arranged to avoid the side wall of the avoidance groove 1901, so that the gas can be discharged from the pressure relief hole 113. The baffle 1903 is arranged at one end of the avoidance groove 1901, the baffle 1903 can block one end of the pressure relief groove 111, and the other end of the pressure relief groove 111 can abut against the side wall of a box body 140, and therefore, the pressure relief groove 111 can form a sealing groove. The module 120 can be cooled by the first cooling plate 191, and quality of the power battery pack 100 can be improved.

The first cooling plate 191 may be flanged by a seal to prevent other impurities from being discharged into space between the supporting plate 110 and the bottom protective plate 130. Corresponding to the pressure relief groove 111, a module pressure relief valve 160 and a box pressure relief valve 180 may be arranged on a side wall of the box body 140.

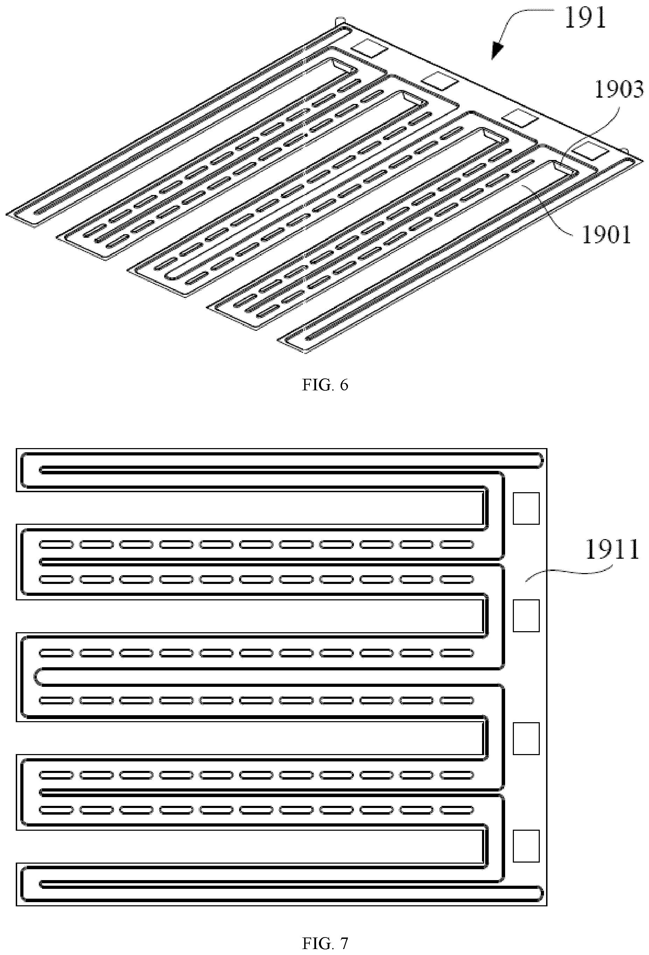

Optionally, as shown in FIGs. 6, 7 and 8, the first cooling plate 191 includes: a runner plate 1911 and a cooling flat plate 1913, wherein the runner plate 1911 is provided with a first groove; and the cooling flat plate 1913 is provided with a second groove, the cooling flat plate 1913 is buckled on the runner plate 1911, so that the second groove is positioned opposite to the first groove to form the avoidance groove 1901.

The cooling flat plate 1913 can be used to support the supporting plate 110. The runner plate 1911 and the cooling flat plate 1913 can be made of aluminum, and the supporting plate 110 can be made of a steel plate.

As shown in FIG. 5, the power battery pack further includes a second cooling plate 193, the second cooling plate 193 and the first cooling plate 191 are oppositely arranged on two opposite sides of the module 120.

The second cooling plate 193 may be a water cooling plate or a flat plate. The second cooling plate 193 is bonded to the module 120, and the second cooling plate 193 and the first cooling plate 191 are arranged oppositely, so as to form dual cooling on the module 120, and achieve a better cooling effect.

Optionally, as shown in FIG.5, the power battery pack further includes a bottom protective plate 130, the supporting plate 110 is arranged on the bottom protective plate 130, and a pressure relief channel 115 is formed between the bottom protective plate 130 and the supporting plate 110.

It can be understood that the bottom protective plate 130 and the supporting plate 110 are respectively have a structure of a plate, the plate surface of the bottom protective plate 130 can be a plane, and the outer surface of the bottom wall of the pressure relief groove 111 also has a plane, so that the bottom wall of the pressure relief groove 111 is conveniently bonded with the bottom protective plate 130. The outer surface of the groove bottom of the pressure relief groove 111 of the supporting plate 110 is attached to the bottom protective plate 130, and parts of the supporting plate 110 located at the two opposite sides of the pressure relief groove 111 respectively protrude in a direction away from the bottom protective plate 130, so as to form the pressure relief channel 115 between the supporting plate 110 and the bottom protective plate 130. The pressure relief hole 113 has a shape of a bell mouth, so that the hot gas entering the pressure relief channel 115 is prevented or reduced from entering other pressure relief cavities 117 and the hot gas can be discharged along the pressure relief channels 115 on two sides.

The pressure relief channel 115 is arranged on at least one side of the two opposite sides of the pressure relief groove 111, and the pressure relief channel 115 extends from the first side to the second side of the supporting plate 110, the protruding part of the supporting plate 110 relative to the pressure relief groove 111 is arranged away from the bottom protective plate 130, and a bottom clearance is formed with the bottom protective plate 130 and bottom clearances on the two opposite sides of the pressure relief groove 111 form the pressure relief channel 115. The protruding part of the supporting plate 110 relative to the pressure relief groove 111 has a convex plane abutting against the battery cell 121, which enables the module 120 to be supported on the supporting plate 110. The groove bottom of the groove can also be a plane, which is beneficial for the supporting plate 110 to be supported on the bottom protective plate 130.

Of course, if the bottom protective plate 130 is removed, only the supporting plate 110 can protect the module 120, and the one-way membrane structure or the one-way valve can isolate the explosion-proof valve 125 from external space, and in this way, the hot gas can be directly discharged to the atmosphere outside the pressure relief cavity 117 if thermal runaway occurs to a single battery cell 121.

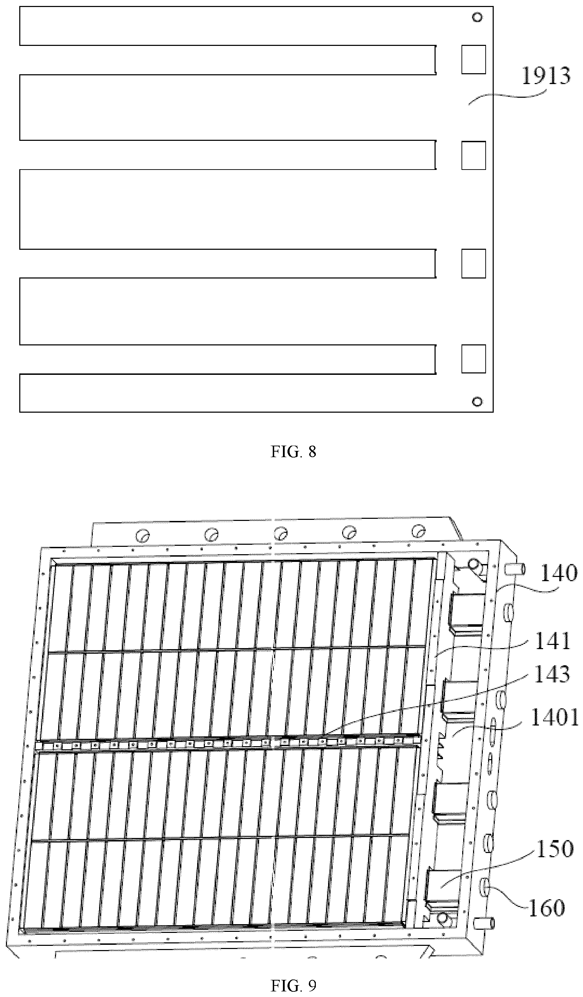

Optionally, as shown in FIGs. 1 and 9, the power battery pack further includes a box body 140, a transverse partition plate 141 is arranged in the box body 140, the transverse partition plate 141 separates an accommodating cavity and a side clearance 1401 in the box body 140, the module 120 is arranged in the accommodating cavity, and an electrical assembly 170 is arranged in the side clearance 1401.

The box body 140 has a cubic structure, the transverse partition plate 141 and a longitudinal partition plate 143 are arranged in the box body 140, the longitudinal partition plate 143 separates two areas in the accommodating cavity, and each area is provided with a module 120.

Optionally, as shown in FIG. 9, the power battery pack further includes a spacer 150 and a module pressure relief valve 160, the spacer 150 is arranged in the side clearance 1401, the spacer 150 is buckled with the pressure relief groove 111, an end surface of one end of the spacer 150 abuts against the transverse partition plate 141, and an end surface of the other opposite end of the spacer 150 abuts against the inner wall of the box body 140; the module pressure relief valve 160 is arranged on the box body 140, and the module pressure relief valve 160 is arranged corresponding to the pressure relief groove 111, and the electrical assembly 170 abuts against the spacer 150.

The spacer 150 is used to extend the pressure relief groove 111 corresponding to the battery cell 121 in the side clearance 1401. As the module pressure relief valve 160 corresponding to the pressure relief groove 111 is arranged on the box body 140, the module pressure relief valve 160 can relieve pressure of the gas entering the pressure relief groove 111.

Optionally, as shown in FIG. 5, the power battery pack further includes a box pressure relief valve 180, the box pressure relief valve 180 is arranged on the box body 140, and the box pressure relief valve 180 is adapted to relieve pressure of the box body 140.

The box pressure relief valve 180 can relieve pressure of flue gas discharged from a clearance of the independent channel.

The battery pack mainly includes the bottom protective plate 130, the supporting plate 110, the module 120, the box body 140, the spacer 150, the electrical assembly 170, a high and low voltage connector, the pressure relief valve, the first cooling plate 191, and the second cooling plate 193.

As shown in FIG. 9, the box body 140 is provided with a cross beam 141 and a longitudinal beam 143 in the middle. A basic installation process is inverted installation: after the box body 140 is pre-installed with the pressure relief valve, the water cooling pipe connector and other parts, the second cooling plate 193 is installed first, a heat-conducting structural adhesive is applied to a sub-channel position of the second cooling plate 193, the assembled module 120 is lifted into the box for laminating and curing; then, electrical parts and the water cooling pipeline in the box body 140 are installed, the structural adhesive is applied to a corresponding position of a contact surface between the bottom of the battery cell 121 and the supporting plate 110, a bottom assembly in which the supporting plate 110 is welded to the bottom protective plate 130 is then installed, bolt fastening/FDS fastening is performed, and laminating and curing are performed. Of course, after the module 120 is installed, the single supporting plate 110 can also be first bonded to the bottom of the module 120, and after curing as a whole, the whole is lifted into the box for bonding and curing through lifting holes in a lifting plate, and then the first cooling plate 191 is installed after the structural adhesive is applied to the contact surface between the supporting plate 110 and the bottom protective plate 130, and finally the bottom protective plate 130 is installed. This mode is a full bonding mode. The spacer 150 may be separately installed at the end, or may be integrated onto the box body 140. After installation, an independent channel of the module 120 has a clearance that cannot be completely sealed, and the flue gas discharged from the fame does not pass through the narrow clearance, and the pressure is relieved by the box pressure relief valve 180 in the space of the box body 140.

The module 120 is basically composed of the battery cells 121, the thermal insulation pads 123 between the battery cells 121, the partition plates, module end plates 127, a CCS assembly, and a CCS assembly protective cover. The CCS assembly is composed of a busbar, an FPC and a bracket, or a busbar, an FFC and a PET fixing membrane.

The supporting plate 110 is made of a thin spring steel, and a thickness of the supporting plate 110 is 0.3 mm to 0.8 mm, or the supporting plate 110 is made of a low-strength energy-absorbing plate, and is pre-welded to the bottom protective plate 130. The explosion-proof valve 125 of the battery cell is located right in the pressure relief groove 111 to form the pressure relief groove 111 with the independent pressure relief cavity 117. The side wall of the pressure relief groove 111 is provided with holes, an opening position is far away from the explosion-proof valve, and a shape of the hole can be a bell mouth under stretching treatment, so as to reduce influences of thermal runaway of a battery cell on neighboring battery cells. At the same time, the bottom of the thermal insulation pad 123 is made to have a protruding structure, and the protrusion of the thermal insulation pad is attached to the side wall of the pressure relief groove 111, so as to form an independent battery cell pressure relief cavity 117 for a single battery cell. When thermal runaway occurs to a single battery cell, as a sealed independent battery cell pressure relief cavity 117 is already formed at the position of the pressure relief valve of the runaway battery cell, the high-temperature gas can only be discharged to the pressure relief channel 115 through the pressure relief holes 113 in the side wall; the influence on the neighboring battery cells: the pressure relief channel 115 and the battery cell 121 are protected by the supporting plate 110, which reduces spread of heat. Although the neighboring battery cells also have exhaust holes in the side wall of the pressure relief cavity, as the pressure relief cavity 117 of the neighboring battery cells is internally sealed, the high-temperature gas is difficult to enter, and the bell mouth shape of the pressure relief hole 113 also increases the difficulty for the hot gas to enter, so that the hot gas is discharged along the pressure relief channel 115. The pressure relief channel 115 is provided with an independent pressure relief valve, the pressure relief channel 115 is formed by the pressure relief spacer 150 arranged on the box body, and the pressure relief channel 115 is basically sealed, so that the electrical assembly, the water cooling pipeline and other parts in the box can be effectively protected. In addition to the pressure relief valve of the independent channel, the box pressure relief valve 180 is additionally installed on the box body 140, which can be used to relieve the pressure of the flue gas discharged from the clearance of the independent channel.

Optionally, one side of the second cooling plate 193 facing the bottom protective plate 130 is provided with a heat-conducting structure, wherein the heat-conducting structure can be attached to the second cooling plate 193 and the module 120, which is beneficial to heat dissipation of the module 120.

Optionally, the heat-conducting structure includes a heat-conducting adhesive film, and the heat-conducting adhesive film is attached to a side of the second cooling plate 193 facing the bottom protective plate 130. The heat-conducting structural adhesive can be made of a polyurethane heat-conducting structural adhesive or a modified epoxy heat-conducting structural adhesive, and the heat-conducting structural adhesive is film-shaped and has a good heat-conducting effect.

### Exemplary electrical apparatus

An electrical apparatus includes a power battery pack 100, and the power battery pack 100 is configured as the power battery pack 100 according to any one of the above. When the power battery pack 100 is applied to the electrical apparatus, the power battery pack 100 may include the module 120, and the module 120 may include a plurality of battery cells 121.

Based on the above description, the present application has the following advantages:
1. The explosion-proof valve 125 of the battery cell 121 is opposite to the pressure relief groove 111, the battery cell 121 and the pressure relief cavity 117 formed by the pressure relief groove 111 can accommodate part of the explosion-proof valve, the opening position of the pressure relief hole 113 is far away from the explosion-proof valve, so that, when thermal runaway occurs to a single battery cell 121, as the sealed and independent pressure relief cavity 117 is already formed at the position of the explosion-proof valve 125 of the runaway battery cell, a high-temperature gas can only be discharged through the pressure relief holes 113 in the side wall, which can effectively protect the electrical assembly, the water cooling pipeline and other parts in the box.
2. The thermal insulation pad 123 is attached to the inner wall of the pressure relief groove 111 to form the independent pressure relief cavity 117, which can achieve a good protection effect.
3. The pressure relief hole 113 has a shape of a bell mouth or a one-way valve or a one-way membrane structure is arranged at the pressure relief hole 113, which can reduce the influence of thermal runaway on neighboring battery cells.
4. The first cooling plate 191 is arranged at the bottom, which can achieve a cooling effect on the battery cell and improve cooling efficiency.
5. The second cooling plate 193 is arranged at the top, and the second cooling plate 193 is cooperated with the first cooling plate 191, which can achieve a dual cooling effect on the module 120, and further improve the cooling efficiency.
6. By adding the bottom protective plate 130, the supporting plate 110 is not only further supported, the pressure relief channel 115 can also be formed, so that the hot gas can be discharged from the pressure relief channel 115, which is conducive to treatment of the discharged gas, thus optimizing the ambient air.

In the description of the present application, it should be noted that the orientations or positional relationships indicated by the terms "center", "upper", "lower", "left", "right", "vertical", "horizontal", "inner", "outer", etc. are based on those shown in the accompanying drawings, and are intended only to facilitate the description of the present application and to simplify the description, and are not intended to indicate or imply that the apparatus or element referred to must have a particular orientation, be constructed and operated in a particular orientation, and therefore are not to be construed as a limitation of the present application. Furthermore, the terms "first", "second" and "third" are used for descriptive purposes only and are not to be understood as indicating or implying relative importance.

In the description of the present application, it is to be noted that, unless otherwise expressly specified and limited, the terms "install", "mutually connect", "connect" are to be understood in a broad sense, for example, which may refer to a fixed connection or a detachable connection or an integral connection; which may refer to a mechanical connection or an electric connection; which may refer to a direct connection or an indirect connection by means of intermediate components or a communication within two elements. For those of ordinary skill in the art, the specific meanings of the above terms in the present application can be understood according to specific circumstances.

In addition, the technical features involved in different embodiments of the present application described below may be combined with each other as long as they do not conflict with each other.

Apparently, the above embodiments are merely examples for clarity of illustration and are not limitations of the embodiments. For those of ordinary skill in the art, other variations or modifications in different forms can be made on the basis of the above description. It is not necessary or possible to exhaustively list all embodiments here.

## Claims

1. A power battery pack (100), comprising:
a supporting plate (110), provided with a pressure relief groove (111), the pressure relief groove (111) having a plurality of pressure relief cavities (117) arranged in sequence along a length direction thereof, and each pressure relief cavity (117) being provided with at least one pressure relief hole (113) in each side wall on each of two opposite sides of the pressure relief groove (111); and
a module (120), comprising a plurality of battery cells (121) arranged in sequence, each battery cell (121) corresponding to one pressure relief cavity (117), and each battery cell (121) being provided with an explosion-proof valve (125) which is partially positioned in the pressure relief cavity (117);
**characterized in that**,
a thermal insulation pad (123) is arranged between every two neighboring battery cells (121), the thermal insulation pad (123) extending into the pressure relief groove (111) and abutting against an inner wall of the pressure relief groove (111), so that every two neighboring thermal insulation pads (123) partition one pressure relief cavity (117) in the pressure relief groove (111).

2. The power battery pack (100) according to claim 1, wherein the supporting plate (110) has a structure of a plate body, a part of the plate body of the supporting plate (110) being inwardly recessed to form the pressure relief groove (111), and the module (120) being attached to aother part, which protrudes relative to the pressure relief groove (111), of the plate body of the supporting plate (110).

3. The power battery pack (100) according to claim 1 or 2, wherein an area of a cross section of the pressure relief hole (113) gradually decreases in a direction from an inner wall to an outer wall of the pressure relief groove (111), the cross section of the pressure relief hole (113) being a section perpendicular to a central axis of the pressure relief hole (113).

4. The power battery pack (100) according to claim 1 or 2, wherein a one-way membrane structure or a one-way valve is arranged at the pressure relief hole (113).

5. The power battery pack (100) according to claim 1 or 2, further comprising a first cooling plate (191), wherein the first cooling plate (191) is provided with an avoidance groove (1901), a baffle (1903) is provided at one end of the avoidance groove (1901), the pressure relief groove (111) penetrates through the avoidance groove (1901), the baffle (1903) shields one end of the pressure relief groove (111), the pressure relief hole (113) is arranged to avoid the avoidance groove (1901), and the first cooling plate (191) is connected to the supporting plate (110).

6. The power battery pack (100) according to claim 5, wherein the first cooling plate (191) comprises:
a runner plate (1911), provided with a first groove; and
a cooling flat plate (1913), provided with a second groove, the cooling flat plate (1913) being buckled on the runner plate (1911), so that the second groove is positioned opposite to the first groove to form the avoidance groove (1901).

7. The power battery pack (100) according to claim 5, further comprising a second cooling plate (193), wherein the second cooling plate (193) and the first cooling plate (191) are oppositely arranged on two opposite sides of the module (120).

8. The power battery pack (100) according to claim 1 or 2, further comprising a bottom protective plate (130), wherein the bottom protective plate (130) abuts against an outer wall of a groove bottom of the pressure relief groove (111), so that a pressure relief channel (115) is formed along each of two opposite sides, in a width direction, of the pressure relief groove (111).

9. An electrical apparatus, comprising a power battery pack (100), wherein the power battery pack (100) is configured as the power battery pack (100) according to any one of claims 1 to 8.

## Patentansprüche

1. Leistungsbatteriepack (100), umfassend:
eine Stützplatte (110), bereitgestellt mit einer Druckentlastungsnut (111), wobei die Druckentlastungsnut (111) eine Vielzahl von Druckentlastungshohlräumen (117) aufweist, die entlang einer Längsrichtung davon hintereinander angeordnet sind, und jeder Druckentlastungshohlraum (117) mit zumindest einem Druckentlastungsloch (113) in jeder Seitenwand auf jeder von zwei gegenüberliegenden Seiten der Druckentlastungsnut (111) bereitgestellt ist; und
ein Modul (120), umfassend eine Vielzahl von Batteriezellen (121), die in Folge angeordnet ist, wobei jede Batteriezelle (121) einem Druckentlastungshohlraum (117) entspricht und jede Batteriezelle (121) mit einem explosionssicheren Ventil (125) bereitgestellt ist, das teilweise in dem Druckentlastungshohlraum (117) positioniert ist;
**dadurch gekennzeichnet, dass**
ein Wärmeisolierkissen (123) zwischen jeweils zwei benachbarten Batteriezellen (121) angeordnet ist, wobei sich das Wärmeisolierkissen (123) in die Druckentlastungsnut (111) erstreckt und an einer Innenwand der Druckentlastungsnut (111) anliegt, sodass jeweils zwei benachbarte Wärmeisolierkissen (123) einen Druckentlastungshohlraum (117) in der Druckentlastungsnut (111) teilen.

2. Leistungsbatteriepack (100) nach Anspruch 1, wobei die Stützplatte (110) eine Struktur eines Plattenkörpers aufweist, wobei ein Teil des Plattenkörpers der Stützplatte (110) nach innen ausgespart ist, um die Druckentlastungsnut (111) zu bilden, und das Modul (120) an einem anderen Teil, der relativ zu der Druckentlastungsnut (111) vorsteht, des Plattenkörpers der Stützplatte (110) angebracht ist.

3. Leistungsbatteriepack (100) nach Anspruch 1 oder 2, wobei eine Querschnittsfläche des Druckentlastungslochs (113) allmählich in einer Richtung von einer Innenwand zu einer Außenwand der Druckentlastungsnut (111) abnimmt, wobei der Querschnitt des Druckentlastungslochs (113) ein Schnitt senkrecht zu einer Mittelachse des Druckentlastungslochs (113) ist.

4. Leistungsbatteriepack (100) nach Anspruch 1 oder 2, wobei eine Einwegmembranstruktur oder ein Einwegventil an dem Druckentlastungsloch (113) angeordnet ist.

5. Leistungsbatteriepack (100) nach Anspruch 1 oder 2, ferner umfassend eine erste Kühlplatte (191), wobei die erste Kühlplatte (191) mit einer Ausweichnut (1901) bereitgestellt ist, eine Ablenkplatte (1903) an einem Ende der Ausweichnut (1901) bereitgestellt ist, die Druckentlastungsnut (111) die Ausweichnut (1901) durchdringt, die Ablenkplatte (1903) ein Ende der Druckentlastungsnut (111) abschirmt, das Druckentlastungsloch (113) so angeordnet ist, dass es die Ausweichnut (1901) ausspart, und die erste Kühlplatte (191) mit der Stützplatte (110) verbunden ist.

6. Leistungsbatteriepack (100) nach Anspruch 5, wobei die erste Kühlplatte (191) Folgendes umfasst:
eine Strömungsplatte (1911), bereitgestellt mit einer ersten Nut; und
eine flache Kühlplatte (1913), bereitgestellt mit einer zweiten Nut, wobei die flache Kühlplatte (1913) an der Strömungsplatte (1911) befestigt ist, sodass die zweite Nut gegenüber der ersten Nut positioniert ist, um die Ausweichnut (1901) zu bilden.

7. Leistungsbatteriepack (100) nach Anspruch 5, ferner umfassend eine zweite Kühlplatte (193), wobei die zweite Kühlplatte (193) und die erste Kühlplatte (191) gegenüberliegend auf zwei gegenüberliegenden Seiten des Moduls (120) angeordnet sind.

8. Leistungsbatteriepack (100) nach Anspruch 1 oder 2, ferner umfassend eine Bodenschutzplatte (130), wobei die Bodenschutzplatte (130) an einer Außenwand eines Nutbodens der Druckentlastungsnut (111) anliegt, sodass ein Druckentlastungskanal (115) entlang jeder von zwei gegenüberliegenden Seiten in einer Breitenrichtung der Druckentlastungsnut (111) gebildet ist.

9. Elektrische Einrichtung, umfassend ein Leistungsbatteriepack (100), wobei das Leistungsbatteriepack (100) als das Leistungsbatteriepack (100) nach einem der Ansprüche 1 bis 8 konfiguriert ist.

## Revendications

1. Bloc-batterie d'alimentation (100), comprenant :
une plaque de support (110), pourvue d'une rainure de décompression (111), la rainure de décompression (111) comportant une pluralité de cavités de décompression (117) agencées en séquence dans une direction longitudinale de celle-ci, et chaque cavité de décompression (117) étant pourvue d'au moins un trou de décompression (113) dans chaque paroi latérale sur chacun des deux côtés opposés de la rainure de décompression (111) ; et
un module (120), comprenant une pluralité de cellules de batterie (121) disposées en séquence, chaque cellule de batterie (121) correspondant à une cavité de décompression (117), et chaque cellule de batterie (121) étant pourvue d'une soupape antidéflagrante (125) qui est partiellement positionnée dans la cavité de décompression (117) ;
**caractérisé en ce que**,
un tampon d'isolation thermique (123) est agencé entre chaque paire de cellules de batterie voisines (121), le tampon d'isolation thermique (123) s'étendant dans la rainure de décompression (111) et venant en butée contre une paroi interne de la rainure de décompression (111), de sorte que chaque paire de tampons d'isolation thermique voisins (123) sépare une cavité de décompression (117) dans la rainure de décompression (111).

2. Bloc-batterie d'alimentation (100) selon la revendication 1, dans lequel la plaque de support (110) a une structure d'un corps de plaque, une partie du corps de plaque de la plaque de support (110) étant en retrait vers l'intérieur pour former la rainure de décompression (111), et le module (120) étant fixé à une autre partie, qui fait saillie par rapport à la rainure de décompression (111), du corps de plaque de la plaque de support (110).

3. Bloc-batterie d'alimentation (100) selon la revendication 1 ou 2, dans lequel une surface d'une section transversale du trou de décompression (113) diminue progressivement dans une direction allant d'une paroi interne à une paroi externe de la rainure de décompression (111), la section transversale du trou de décompression (113) étant une section perpendiculaire à un axe central du trou de décompression (113).

4. Bloc-batterie d'alimentation (100) selon la revendication 1 ou 2, dans lequel une structure de membrane unidirectionnelle ou une soupape unidirectionnelle est agencée au niveau du trou de décompression (113).

5. Bloc-batterie d'alimentation (100) selon la revendication 1 ou 2, comprenant en outre une première plaque de refroidissement (191), dans lequel la première plaque de refroidissement (191) est pourvue d'une rainure d'évitement (1901), un déflecteur (1903) est prévu à une extrémité de la rainure d'évitement (1901), la rainure de décompression (111) pénètre à travers la rainure d'évitement (1901), le déflecteur (1903) protège une extrémité de la rainure de décompression (111), le trou de décompression (113) est agencé pour éviter la rainure d'évitement (1901), et la première plaque de refroidissement (191) est raccordée à la plaque de support (110).

6. Bloc-batterie d'alimentation (100) selon la revendication 5, dans lequel la première plaque de refroidissement (191) comprend :
une plaque de circulation (1911), pourvue d'une première rainure ; et
une plaque plane de refroidissement (1913), pourvue d'une seconde rainure, la plaque plane de refroidissement (1913) étant emboîtée sur la plaque de circulation (1911), de sorte que la seconde rainure soit positionnée face à la première rainure pour former la rainure d'évitement (1901).

7. Bloc-batterie d'alimentation (100) selon la revendication 5, comprenant en outre une seconde plaque de refroidissement (193), dans lequel la seconde plaque de refroidissement (193) et la première plaque de refroidissement (191) sont agencées face à face sur deux côtés opposés du module (120).

8. Bloc-batterie d'alimentation (100) selon la revendication 1 ou 2, comprenant en outre une plaque de protection inférieure (130), dans lequel la plaque de protection inférieure (130) vient en butée contre une paroi externe d'un fond de rainure de la rainure de décompression (111), de sorte qu'un canal de décompression (115) soit formé le long de chacun de deux côtés opposés, dans un sens de la largeur, de la rainure de décompression (111).

9. Appareil électrique, comprenant un bloc-batterie d'alimentation (100), dans lequel le bloc-batterie d'alimentation (100) est configuré comme le bloc-batterie d'alimentation (100) selon l'une quelconque des revendications 1 à 8.
